# EUROPEAN PATENT APPLICATION

(11) **EP 4 768 726 A1**
(43) Date of publication of application: **01.07.2026**
(21) Application number: 25217068.3
(22) Date of filing: 19.11.2025
(51) Int. Cl.: F04C 15/00, F04B 53/16, F16H 7/18

(54) **A PUMP ASSEMBLY FOR A POWER UNIT**

(30) Priority: 25.12.2024 IN 202441102941
(71) Applicant: TVS Motor Company Limited, 600006 Chennai (IN)
(72) Inventor: Somalinga, Kumaran Vjnothkumar, 600006 Chennai (IN); Subramanian, Krishnakumar, 600006 Chennai (IN); Prem, Anand, 600006 Chennai (IN); Arumugam, Sivakumar, 600006 Chennai (IN)
(74) Representative: Patentanwaltskanzlei Matschnig & Forsthuber OG

(57) **Abstract**

The present application discloses a pump assembly (100) for a power unit (10). The pump assembly (100) includes at least one pump housing (102) configured to accommodate one or more pumps, and a guide assembly (110). The one or more pumps comprise at least one pump rotor shaft (112) is connected to a driven sprocket (106) such that the driven sprocket (106) is connected drive sprocket (104A) via an endless transmission (108). The guide assembly (110) is configured with the at least one pump housing (102). The guide assembly (110) is placed in the vicinity of the endless transmission (108).

## Description

### TECHNICAL FIELD

The present subject matter relates to an internal combustion engine, more particularly relates to a pump assembly for a power unit of a vehicle.

### BACKGROUND

Typically, original equipment manufacturers (OEMs) be apt to improve the overall performance of a vehicle. The overall performance of the vehicle is dependent on a prime mover efficiency. Importantly, the prime mover efficiency is directly dependent on some of the factors such as compression ratio, air fuel ratio, parameters of design, thermal management, turbocharging and supercharging, and lubrication.

It is observed that without proper lubrication, the prime mover can face several severe problems such as increased friction and wear which is due to metal-to-metal contact, overheating because of a greater number of moving parts, corrosion and rust, contamination and sludge build-up, issue of noise vibration and harshness, and many more.

Generally, the prime mover such as an internal combustion engine include a cylinder head. The cylinder head of the prime mover has multiple moving parts such as intake and exhaust valves, valve springs, camshaft (s), rocker arms, tappet (s), pushrod (s), timing chain, variable valve timing components, and a like. Further, the prime mover include a crankcase assembly which is a fundamental part of the prime mover serving as the enclosure for the prime mover's internal moving components. It is typically located below a cylinder block and forms the lower part of the prime mover structure. Some of the components such as a crankshaft, main bearing, connecting rod, an oil pan and pump, a cam shaft and a like. These parts requires sufficient supply of a lubrication oil which can be mineral oil, synthetic oil, semi-synthetic oil and a like for smooth functioning.

Typically, the oil pump serves the purpose of lubrication in the prime mover. Its primary function is to circulate oil to the prime mover moving parts. Generally, the oil pump assembly include a housing, rotors/ gear, valves, drive mechanism, and a like. More particularly, the drive mechanism of the oil pump ensures the synchronization of the pump with the prime mover, for maintaining a constant flow of oil to lubricate and cool moving parts. In a known art, the crankshaft is connected to the drive mechanism via gears but due the single shaft (crankshaft) used for the connection with the drive mechanism of pump with having a multi-function of feeding the oil and scavenging the limitation of clearance arise between the rotating parts such as crankshaft and balancer shaft. Hence the obvious solution is to increase the space between the crankshaft and the oil pump, more particularly the drive mechanism and the crankshaft. But due to this the center distance between the crankshaft and the drive mechanism increases which is undesirable.

To solve the problem of increased center distance, the OEMs introduced a sprocket and chain or belt arrangement to connect the pump shaft and crank shaft for operating the lubrication pump. The chain and sprocket arrangement provides the benefit of consistent power transmission, compact design with high efficiency and low maintenance. But this mechanism indirectly increases the problem of chain slackness over period of time, further the complex tensioning system is also becoming essential to maintain proper chain tension. Chain slackness causes problems of noise, vibrations and wear during operation of the engine.

In a known art, the chain tensioner is placed in the cylinder block which is between the crankcase and the oil pan, but connecting the tensioner to the cylinder block by a pivot shaft or in yet another know art, the tensioner is connected to the grooves limit of the cylinder block brings out certain challenges such as structural integrity of the cylinder block because of increase in stress concentrations which may leads to potential cracking. Further, the issues of misalignment also arises because of uneven pressure distribution. Furthermore, the difficulty in maintenance and repair also is there because to replace the liner or O-ring, the whole tensioner is to taken out and inspection also becomes challenging.

Hence, there is a need to provide a solution to above mentioned at least one of the above-mentioned problem.

### SUMMARY

The following summary is illustrative only and is not intended to be in any way limiting. In addition to the illustrative aspects, embodiments, and features described above, further aspects, embodiments, and features will become apparent by reference to the drawings and the following detailed description
Aspects of the present invention pertains to a pump assembly for a power unit. The pump assembly includes at least one pump housing which may be configured to accommodate one or more pumps, the one or more pumps may include at least one pump rotor shaft may be connected to a driven sprocket, the driven sprocket may be connected drive sprocket via an endless transmission and the guide assembly may be configured with the at least one pump housing and may be placed in the vicinity of the endless transmission.

Another embodiment of the present invention pertains to the guide assembly, it may include a guide member pivotally coupled to the at least one pump housing, the guide member may be configured to rotate along a pivoted axis.

In another embodiment, the guide assembly which may include at least one resilient member, the at least one resilient member may include a first portion may be affixed to the guide member and a second portion of the at least one resilient member may be affixed to the at least one pump housing. The at least one resilient member may be configured to bias the guide member towards the endless transmission.

In another embodiment, the guide member may include one or more portions. The one or one portions of the guide member may be a first portion, a second portion, and a third portion. The first portion may be configured to have a predetermined profile and being adapted to selectively engage and disengage with the endless transmission.

In another embodiment, the second portion of the guide member may be extended from the first portion, the second portion of the guide member may be adapted to engage with the first portion of the at least one resilient member. The second portion may have a predetermined cross-section.

In another embodiment, the third portion of the guide member may be extended from the first portion. The third portion may be adapted to pivotally connect to a connecting portion of the at least one pump housing.

In another embodiment, the pump housing may be detachably connected to a lower portion of a crankcase of the power unit. The drive sprocket being connected to a crank shaft of the power unit.

Another aspect of the present invention pertains to a power unit for a vehicle. The power unit includes a crankcase assembly having a drive sprocket connected to a crankshaft. The power unit further includes at least one pump housing configured to accommodate one or more pumps, the one or more pumps include at least one pump rotor shaft connected to a driven sprocket. The driven sprocket is connected a drive sprocket via an endless transmission. A guide assembly is configured with the at least one pump housing and placed in the vicinity of the endless transmission.

In another embodiment, the crankcase assembly includes a crankcase lower portion, and a crank case upper portion configured above the lower portion. The at least one pump housing may be detachably connected to the crankcase lower portion.

Another aspect of the present invention pertains to a vehicle includes a power unit which may be connected to a frame assembly of the vehicle. The power unit a crankcase assembly having a drive sprocket which may be connected to a crankshaft. The power unit includes a pump assembly including at least one pump housing configured to accommodate one or more pumps, the one or more pumps include at least one pump rotor shaft connected to a driven sprocket, the driven sprocket connected drive sprocket via an endless transmission, a guide assembly configured with the at least one pump housing and may be placed in the vicinity of the endless transmission.

Further, it is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles. The detailed description of the present subject matter is described with reference to the accompanying figures. Same numbers are used throughout the drawings to reference features and components.
**Fig. 1** illustrates a perspective view of a pump assembly connected to a crank shaft of a power unit, in accordance with embodiment of the present invention.
**Fig. 2** illustrates a perspective view of a pump assembly, in accordance with embodiment of the present invention.
**Fig. 3** illustrates a perspective view of the pump assembly with a chain and a guide member, in accordance with embodiment of the present invention.
**Fig. 4** illustrates another perspective view of the pump assembly, in accordance with embodiment of the present invention.
**Fig. 5** illustrates a perspective view of a guide member of the pump assembly, in accordance with embodiment of the present invention.
**Fig.6** illustrates a bottom view of the power unit with the pump assembly mounted to a crankcase lower portion, in accordance with embodiment of the present invention.

### DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments. It is intended that the following detailed description be considered as exemplary only, with the true scope and spirit is indicated by the following claims.

The embodiments of the present invention will now be described in detail with reference to a pump assembly along with the accompanying drawings. However, the present invention is not limited to the present embodiments. The present subject matter is further described with reference to accompanying figures. It should be noted that the description and figures merely illustrate principles of the present subject matter. Various arrangements may be devised that, although not explicitly described or shown herein, encompass the principles of the present subject matter. Moreover, all statements herein reciting principles, aspects, and examples of the present subject matter, as well as specific examples thereof, are intended to encompass equivalents thereof.

The present invention pertains to a pump assembly for a power unit. The pump assembly include at least one pump housing which is configured to accommodate one or more pumps and a guide assembly. The one or more pumps include at least one pump rotor shaft that is connected to a driven sprocket. The driven sprocket is connected to a drive sprocket via an endless transmission. Further, the guide assembly is configured with the at least one pump housing and placed in the vicinity of the endless transmission.

The object of the present invention is to improve the lubrication and cooling in the power unit, to increase the efficiency and power of the power unit.

Another object of the present invention is to decrease reduce noise and vibration, wear and tear in connecting members connecting the pump rotor shaft and crank shaft of power unit, by guiding a chain connecting the p rotor shaft and crank shaft.

Yet another object of the present invention is to reduce the slackness and elongation issues related to an endless transmission of the power unit.

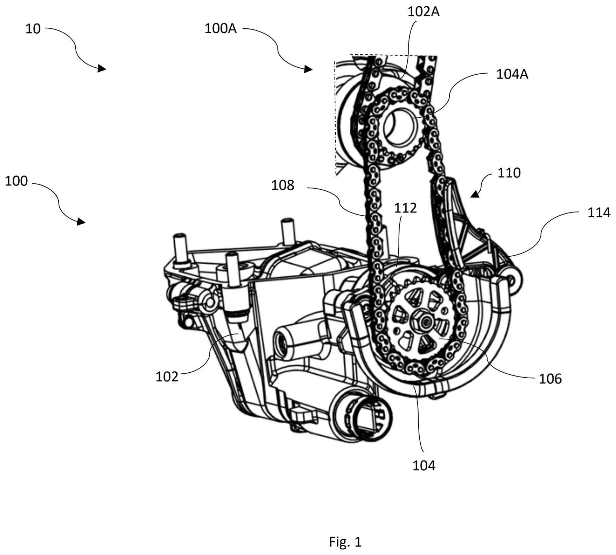

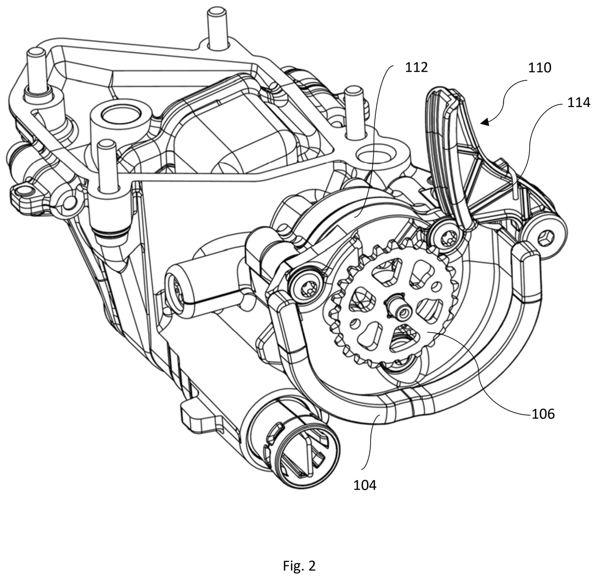

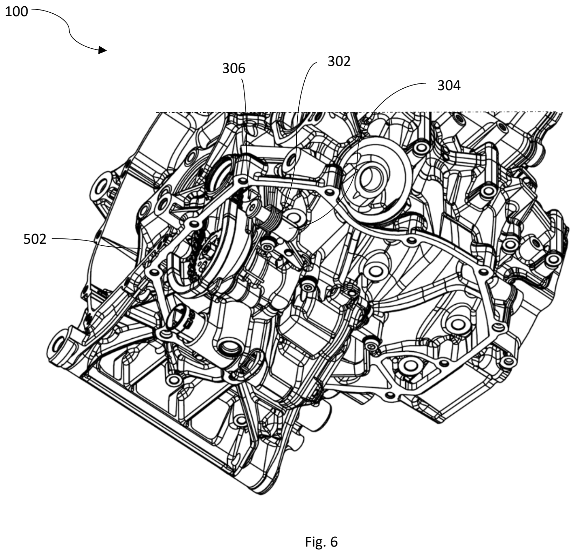

Referring to **Fig. 1** **in conjunction with** **Fig. 2** **and** **Fig.6** illustrates a perspective view of a pump assembly connected to a crank shaft of a power unit, in accordance with embodiment of the present invention.

The power unit 10 is provided in a vehicle. In an embodiment, the vehicle can be a two wheeled vehicle, a three wheeled vehicle, a four wheeled vehicle or a multiple wheeled vehicle. In yet another embodiment, the power unit can be an internal combustion engine. The power unit 10 include a crankcase assembly 100A. The crankcase assembly 100A is provided to enclose multiple components of the power unit 10. In an aspect, the multiple components are such as a drive sprocket 104A, a crankshaft 102A and a like. Further, the crankcase assembly 100A include a crankcase lower (not shown) and, a crankcase upper (not shown).

As illustrated in Fig. 1, the power unit 10 include the drive sprocket 104A. The drive sprocket 104A is connected to the crankshaft 102A. In an aspect, the drive sprocket 104A is operably connected to the crankshaft 102A. Further, the crankshaft 102A is operatively connected a piston (not shown) via a connecting rod (not shown).

Further, the power unit 10 include at least one pump assembly 100. In an embodiment, the pump assembly 100 is connected to the crankcase lower (not shown) of the power unit 10. In an aspect, the pump assembly 100 is connected via fasteners. In an embodiment, in the two wheeled straddle type vehicle the pump assembly 100 is positioned in a vertical direction of the two wheeled saddle type vehicle, when viewed from the vehicle side view. In yet another embodiment, in the two wheeled saddle type vehicle the pump assembly 100 is positioned in a horizontal direction of the two wheeled straddle type vehicle.

As illustrated, the pump assembly 100 include at least one pump housing 102. The pump housing 102 is adapted to accommodate one or more pumps (not shown). Further, the one or more pumps includes at least one pump rotor shaft 112. In an embodiment, the pump rotor shaft 112 is adapted to transfer the torque to enable the pumps to generate the necessary flow and pressure for operation. As shown, the pump rotor shaft 112 is operably connected to the driven sprocket 106. More particularly, the pump rotor shaft 112 is adapted to rotate when the driven sprocket 106 is operated. Furthermore, the driven sprocket 106 is connected to the drive sprocket 104A via an endless transmission 108. In an embodiment, the endless transmission 108 can be a chain or ,a belt to transfer the rotatory motion from the drive sprocket 104A to the driven sprocket 106. In an embodiment, the endless transmission 108 can be placed either in vertically direction or horizontally direction of the power unit 10.

As shown in Fig. 1, the power unit 10 include a guide assembly 110. The guide assembly 110 is connected with the pump housing 102. In an embodiment, the guide assembly 110 is detachably connected with the pump housing 102. Further, the guide assembly 110 is placed in vicinity of the endless transmission 108. In an aspect, at least one portion of the guide assembly 110 is placed in between the drive sprocket 104A and the driven sprocket 106.

As illustrated in the Fig. 2, the pump assembly 100 is adapted to accommodate the guide assembly 110. In an aspect, the guide assembly 110 is placed in a vertically direction with respect to the pump rotor shaft 112. In another aspect, the guide assembly 110 is placed in a vertical direction with respect to the driven sprocket 106.

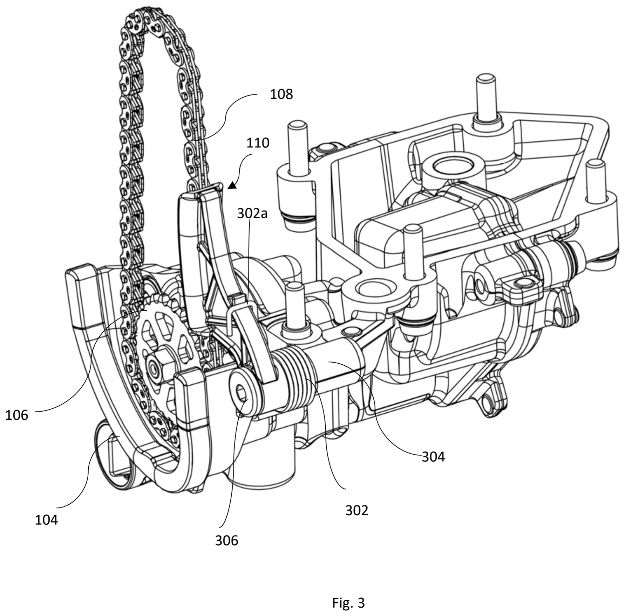

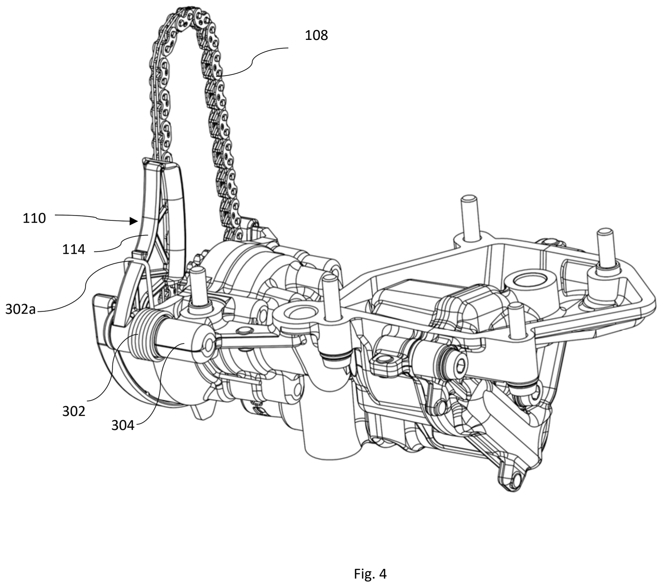

Referring to **Fig. 3** illustrates a perspective view of the pump assembly pump assembly with a chain and a guide member, in accordance with embodiment of the present invention in conjunction with **Fig. 4** illustrates another perspective view of the pump assembly having the guide member and a resilient member, in accordance with embodiment of the present Invention.

As illustrated, the pump assembly 100 is adapted to accommodate the guide assembly 110. The guide assembly 100 includes a guide member 114. The guide member 114 is pivotally coupled to the pump housing 102. Further, the guide member 100 include at least one resilient member 302. In an aspect, the pump housing 102 include a connecting portion 304. In an embodiment, the connecting portion 304 is extending outwardly in a horizontal direction from the pump housing 102. The guide member 114 and the resilient member 302 is connected to the connecting portion 304 of the pump housing 102.

In a working example, at the time of assembling the resilient member 302 is first accommodated to the connecting portion 304 of the pump housing 102 and the guide member 114 is accommodated to the connecting portion 304 and further, a fastener 306 is connected to fix the guide member 302 and the resilient member 302. In an embodiment, the resilient member 302 is a tensioner spring.

As illustrated, the pump assembly 100 include the resilient member 302. The resilient member 302 includes a first portion 302a and a second portion (not shown). In an aspect, the first portion 302a is affixed to the guide member 114 and the second portion is affixed to the pump housing 102. In an aspect, the resilient member 302 is configured to bias the guide member 114 towards the endless transmission 108. Further, the guide member 114 is adapted to perform the oscillatory motion with respect to a central axis of the connecting portion 304.

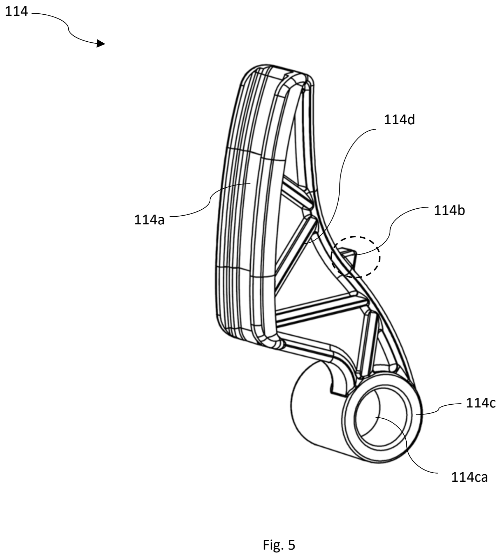

Referring to **Fig. 5** illustrates a perspective view of the guide member of the pump assembly, in accordance with embodiment of the present invention.

The guide member 114 of the guide assembly 110 include one or more portions 114a, 114b, 114. In an aspect, the one or more portions 114a, 114b, 114c include a first portion 114a, a second portion 114b, a third portion 114c, and a body portion 114d. In an embodiment, the body portion 114d of the guide member 114 is adapted to extend the first portion 114a, the second portion 114b and the third portion 114c outwardly. In yet another embodiment, the body portion 114d is sandwiched between the first portion 114a and the second portion 114b. In yet another embodiment, the third portion 114c is extending downwardly from the body portion 114d, when viewed from a front view of the guide member 114.

As illustrated, the first portion 114a of the guide member 114 is configured to have a predetermined profile. In a non-limiting example, the first portion 114a has a step formation and a flat surface in a central region. In another non-limiting example, the first portion 114a has a U shape profile, when viewed from a top view of the guide member 114. Further, the guide member 114 is adapted to selectively engage and disengage with the endless transmission 108. In an embodiment, the first portion 114a of the guide member 114 is adapted to engage with the endless transmission 108 to increase tension, when the endless transmission 108 is adapted to rotate the driven sprocket 106 by the drive sprocket 104A. In another embodiment, the first portion 114a is disengaged from the endless transmission 108 when the endless transmission 108 is not loose or slackness is limited.

As shown, the second portion 114b of the guide member 114 is adapted to extend from the body portion 114d, when viewed from the front view of the guide member 114. Further the second portion 114b of the guide member 114 is adapted to engage with the first portion 302a of the at least one resilient member 302. In an aspect, as illustrated in fig.4 the first portion 302a is engaged with the second portion 114b of the guide member 114. In an embodiment, the second portion 114b has a predetermined cross-section. In a non-limiting example, the second portion 114b has a triangular cross section.

Further, the third portion 114c of the guide member 114 extends downwardly from the body portion 114d. The third portion 114c is adapted to pivotally connect a connecting portion 304 of the at least one pump housing 102. In an embodiment, the third portion 114c is configured to have a circular cross-section, when viewed from a top view. In yet another embodiment, the third portion 114c include a hollow portion 114ca. The hollow portion 114ca is adapted to receive the connecting portion 304 of the pump housing 102.

The present invention offers a significant technical improvement over existing as It enhances the durability of sprockets and chains by minimizing wear and slippage, thereby extending the lifespan of these components. The system effectively maintains chain slackness and ensures precise chain guidance, reducing the likelihood of misalignment and improving overall reliability. Additionally, it optimizes oil pump performance, contributing to better lubrication and system efficiency. By addressing operational noise caused by the chain running over the sprocket, it significantly improves acoustic comfort. These improvements reduce maintenance requirements, enhance energy efficiency, and ensure consistent, dependable operation, making the invention a valuable advancement in chain-sprocket systems.
embodiment", "embodiment", "embodiments", "the embodiment", "the embodiments", "one or more embodiments", "some embodiments", and "one embodiment" mean "one or more (but not all) embodiments of the invention(s)" unless expressly specified otherwise. The terms "including", "comprising", "having" and variations thereof mean "including but not limited to", unless expressly specified otherwise. The terms "a", "an" and "the" mean "one or more", unless expressly specified otherwise.

Finally, the language used in the specification has been principally selected for readability and instructional purposes, and it may not have been selected to delineate or circumscribe the inventive subject matter and is therefore intended that the scope of the invention be limited not by this detailed description, but rather by any claims that issue on an application based here on. Accordingly, the embodiments of the present invention are intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope as indicated by the following claims.

A person with ordinary skills in the art will appreciate that the system and method have been illustrated and explained to serve as examples and should not be considered limiting in any manner. It will be further appreciated that the variants of the above disclosed system elements, modules, and other features and functions, or alternatives thereof, may be combined to create other different systems or applications.

### REFERENCE NUMERIALS

10- power unit
100- pump assembly
100A- crankcase assembly
102- pump housing
102A- crankshaft
104- outer casing
104A- drive sprocket
106- driven sprocket
108- endless transmission
110- guide assembly
112- pump rotor shaft
114- guide member
114a-first portion of guide member
114b-second portion of guide member
114c-third portion of guide member
114d-body portion of guide member
302- resilient member
302a-first portion of resilient member
302b- second portion of resilient member
304- connecting member
306- fastener

## Claims

1. A pump assembly (100) for a power unit (10), the pump assembly (100) comprising:
at least one pump housing (102) configured to accommodate one or more pumps, the one or more pumps comprising at least one pump rotor shaft (112) being connected to a driven sprocket (106), the driven sprocket (106) being connected to a drive sprocket (104A) via an endless transmission (108); and
a guide assembly (110), the guide assembly (110) being connected with the at least one pump housing (102) and being placed in the vicinity of the endless transmission (108).

2. The pump assembly (100) as claimed in claim 1, wherein the guide assembly (110) comprises a guide member (114) pivotally coupled to the at least one pump housing (102), the guide member (114) being configured to rotate along a pivoted axis.

3. The pump assembly (100) as claimed in claim 2, wherein the guide assembly (100) comprises at least one resilient member (302), the at least one resilient member (302) comprises a first portion (302a) being affixed to the guide member (114) and a second portion of the at least one resilient member (302) being affixed to the at least one pump housing (102), and wherein the at least one resilient member (302) being configured to bias the guide member (114) towards the endless transmission (108).

4. The pump assembly (100) as claimed in claim 2, wherein the guide member (114) comprises one or more portions (114a, 114b, 114c), the one or one portions (114a, 114b, 114c) comprising a first portion (114a), a second portion (114b), and a third portion (114c); wherein, the first portion (114a) being configured to have a predetermined profile and being adapted to selectively engage and disengage with the endless transmission (108).

5. The pump assembly (100) as claimed in claim 3, wherein the second portion (114b) of the guide member (114) being extended from a body portion (114d), the second portion (114b) of the guide member (114) being adapted to engage with the first portion (302a) of the at least one resilient member (302), and wherein the second portion (114b) comprises a predetermined cross-section.

6. The pump assembly (100) as claimed in claim 3, wherein the third portion (114c) of the guide member (114) being extended from the body portion (114d) , the third portion (114c) being adapted to pivotally connect to a connecting portion (304) of the at least one pump housing (102).

7. The pump assembly (100) as claimed in claim 1, wherein the pump housing (102) being detachably connected to a lower portion of a crankcase of the power unit, and wherein the drive sprocket (104A) being connected to a crank shaft (102A) of the power unit (10).

8. A power unit (10) for a vehicle, the power unit (10) comprising:
a crankcase assembly (100A), the crankcase assembly (100A) comprises a drive sprocket (104A) being connected to a crankshaft (102A); and
a pump assembly (100), the pump assembly (100) comprising:
at least one pump housing (102) configured to accommodate one or more pumps, the one or more pumps comprising at least one pump rotor shaft (112) being connected to a driven sprocket (106), the driven sprocket (106) being connected the drive sprocket (104A) via an endless transmission (108); and
a guide assembly (110), the guide assembly (110) being connected with the at least one pump housing (102) and being placed in the vicinity of the endless transmission (108).

9. The power unit (10) as claimed in claim 8, wherein the crankcase assembly (110A) comprises a crankcase lower portion (502) and a crank case upper portion configured above the crank case lower portion (502), wherein the at least one pump housing (102) being detachably connected to the crankcase lower portion (502).

10. A vehicle, comprising:
a power unit (10), the power unit (10) being connected to a frame assembly of the vehicle; wherein the power unit (10) comprising:
a crankcase assembly (100A), the crankcase assembly (100A) comprises a drive sprocket (104A) being connected to a crankshaft (102A); and
a pump assembly (100), the pump assembly (100) comprising:
at least one pump housing (102) configured to accommodate one or more pumps, the one or more pumps comprising at least one pump rotor shaft (112) being connected to a driven sprocket (106), the driven sprocket (106) being connected to a drive sprocket (104A) via an endless transmission (108); and
a guide assembly (110), the guide assembly (110) being connected with the at least one pump housing (102) and being placed in the vicinity of the endless transmission (108).
